(19) Europäisches Patentamt
European Patent Office
Office européen des brevets

(11) **EP 3 929 244 B1**

(12) **EUROPEAN PATENT SPECIFICATION**

(45) Date of publication and mention of the grant of the patent:
**12.07.2023 Bulletin 2023/28**

(21) Application number: **20758436.8**

(22) Date of filing: **17.02.2020**

(51) International Patent Classification (IPC):
***C08L 23/10*** *(2006.01)* ***C08L 23/16*** *(2006.01)*

(52) Cooperative Patent Classification (CPC):
(C-Sets available)
**C08L 23/16;** C08L 2205/035; C08L 2205/22 (Cont.)

(86) International application number:
**PCT/JP2020/006066**

(87) International publication number:
**WO 2020/171019 (27.08.2020 Gazette 2020/35)**

(54) **OLEFIN- BASED POLYMER COMPOSITION AND FROMED PRODUCT THEREOF**

POLYMERZUSAMMENSETZUNG AUF OLEFINBASIS UND DARAUS GEFORMTES PRODUKT

COMPOSITION DE POLYMÈRE À BASE D'OLÉFINE ET PRODUIT FORMÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2019 JP 2019030631**

(43) Date of publication of application:
**29.12.2021 Bulletin 2021/52**

(73) Proprietor: **Mitsui Chemicals, Inc.**
**Tokyo 104-0028 (JP)**

(72) Inventors:
- **YODA Yusuke**
  **Sodegaura-shi, Chiba 299-0265 (JP)**
- **JITSUKATA Masakazu**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 272 790**
**WO-A1-2018/181121**
**GB-A- 2 007 683**
**JP-A- 2004 277 516**
**JP-A- 2005 220 229**
**US-A1- 2007 135 576**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 929 244 B1

(52) Cooperative Patent Classification (CPC): (Cont.)

C-Sets
**C08L 23/16, C08L 23/12, C08L 23/12, C08L 91/00, C08L 91/06, C08K 5/0025, C08K 3/04, C08K 3/22;**
**C08L 23/16, C08L 23/12, C08L 53/00, C08L 23/12, C08L 91/00, C08L 91/06, C08K 5/0025, C08K 3/04, C08K 3/22;**
**C08L 23/16, C08L 23/12, C08L 91/00, C08L 91/06, C08K 5/0025, C08K 3/04, C08K 3/22**

## Description

### Technical Field

The present invention relates to an olefin-based polymer composition and a formed product obtained from such composition. More specifically, the present invention relates to an olefin-based polymer composition that can prepare a formed product having excellent surface appearance, mechanical strength, and oil resistance in injection molding.

### Background Art

Thermoplastic elastomers are light in weight and easily recyclable. Thus, thermoplastic elastomers are extensively used as energy-saving and resource-saving elastomers, and, in particular, as alternatives to vulcanized rubber, for automobile parts, industrial machinery parts, electric/electronic parts, and constructional materials.

In particular, an olefin-based thermoplastic elastomer comprises, as starting materials, an ethylene-propylene-non-conjugated diene copolymer (EPDM) and a crystalline polyolefin such as polypropylene. Thus, the specific gravity thereof is lower, and its durability in terms of heat aging resistance, weather resistance, and the like is superior to those of other types of thermoplastic elastomers. Thus, an olefin-based thermoplastic elastomer is formed by various forming methods and used in variety of applications.

Patent Literature 1 describes that an elastoplastic composition comprising polyolefin resin and EPDM rubber vulcanized with a phenol resin-based vulcanizing agent is a tough and strong elastomer composition that can be processed as a thermoplastic material. Also, Patent Literature 1 describes that such composition can be processed via extrusion molding, injection molding, blow molding, heat molding, or other means into an article.

### Citation List

#### Patent Literature

Patent Literature 1: JP S54-99156 A (1979)

### Summary of Invention

#### Technical Problem

A composition of polyolefin resin and EPDM obtained with the use of the phenol resin-based crosslinking agent as described above is excellent in oil resistance, mechanical strength, and other properties, and such composition can be processed via various molding techniques. When a formed product is to be obtained via injection molding, advantageously, gate marks are small, and multiple-cavity molding can be performed. Thus, a pin gate may be employed as a mold gate, according to need.

When the composition obtained with the use of the phenol resin-based crosslinking agent is molded via injection molding with the use of a mold with a pin gate, however, the surface properties of the formed product are deteriorated, and a black formed product is whitened in some cases. In addition, such phenomenon is apparent when the composition has low to moderate hardness (i.e., the proportion of EPDM is relatively high in the composition).

It is an object of the present invention to provide a thermoplastic crosslinked composition that is excellent in mechanical strength, oil resistance, and injection moldability.

#### Solution to Problem

The present invention is summarized as follows.

(1) An olefin-based polymer composition comprising:

a component derived from a copolymer (A) (100 parts by mass) comprising a constitutional unit derived from ethylene, a constitutional unit derived from an $\alpha$-olefin having 3 to 20 carbon atoms, and a constitutional unit derived from non-conjugated polyene and having (a-1) the Mooney viscosity [$ML_{1+4}$ (125°C)] of 50 to 200;
one or more types of crystalline propylene-based polymers (B) (10 to 50 parts by mass in total) that satisfy the requirements (b-1) and (b-2):

(b-1) MFR (230°C, load 2.16 kg) of 0.1 to 4 g/10 min; and

(b-2) a melting point (Tm) measured by DSC of 100°C to 200°C;

one or more types of crystalline propylene-based polymers (C) (5 to 30 parts by mass in total) that satisfy the requirements (c-1) and (c-2):

(c-1) MFR (230°C, load 2.16 kg) of 5 to 15 g/10 min; and
(c-2) a melting point (Tm) measured by DSC of 100°C to 200°C; and

low-molecular-weight polyolefin (D) (4 to 18 parts by mass) that satisfies the requirement (d-1):

(d-1) the number average molecular weight measured by gel permeation chromatography of 3,000 to 10,000,

wherein the amounts of (B), (C), and (D) are each relative to 100 parts by mass of (A) and at least a part of the component derived from the copolymer (A) is crosslinked by a phenol resin-based crosslinking agent (E).

(2) The olefin-based polymer composition according to (1), wherein the low-molecular-weight polyolefin (D) further satisfies the requirement (d-2):
(d-2) the heat of fusion measured by DSC of 20 J/g or more.
(3) The olefin-based polymer composition according to (1) or (2), which further comprises 90 to 150 parts by mass of a component derived from a softening agent (F).
(4) The olefin-based polymer composition according to any of (1) to (3), which has MFR (230°C, load 10 kg) of 5 to 150 g/10 min.
(5) The olefin-based polymer composition according to any of (1) to (4), wherein the total amount of the component (B), the component (C), and the low-molecular-weight polyolefin (D) relative to 100 parts by mass of the component derived from the copolymer (A) is 20 to 80 parts by mass.
(6) The olefin-based polymer composition according to any of (1) to (5), which has the Shore A hardness (i.e., the instantaneous value) measured in accordance with JIS K6253 of 50 to 80.
(7) A formed product, which is obtained from the olefin-based polymer composition according to any of (1) to (6).
(8) The formed product according to (7), which is an injection molding product.

Advantageous Effects of the Invention

According to the present invention, a thermoplastic crosslinked composition that is excellent in mechanical strength, oil resistance, and injection moldability can be provided.

Description of Embodiments

The polymer composition according to the present invention at least comprises: (i) a component derived from a copolymer (A) comprising a constitutional unit derived from ethylene, a constitutional unit derived from an α-olefin having 3 to 20 carbon atoms, and a constitutional unit derived from non-conjugated polyene; (ii) a crystalline propylene-based polymer (B); (iii) a crystalline propylene-based polymer (C); and (iv) low-molecular-weight polyolefin (D).
In the present invention, the "component derived from," for example, the "copolymer (A) comprising a constitutional unit derived from ethylene, a constitutional unit derived from an α-olefin having 3 to 20 carbon atoms, and a constitutional unit derived from non-conjugated polyene" is a component obtained from a raw material, such as the copolymer (A).

<Copolymer (A) of ethylene, α-olefin having 3 to 20 carbon atoms, and non-conjugated polyene>

The copolymer (A) of ethylene, α-olefin having 3 to 20 carbon atoms, and non-conjugated polyene used in the present invention (also referred to as "copolymer (A)" in the present invention) is an ethylene-α-olefin-non-conjugated polyene copolymer comprising a constitutional unit derived from ethylene, a constitutional unit derived from at least 1 type of an α-olefin having 3 to 20 carbon atoms, and a constitutional unit derived from at least 1 type of a non-conjugated polyene, which has the Mooney viscosity [$ML_{1+4}$ (125°C)] of 50 to 200.
Examples of an α-olefin having 3 to 20 carbon atoms include: linear α-olefin without a side chain, such as propylene (C3), 1-butene (C4), 1-nonene (C9), 1-decene (C10), 1-nonadecene (C19), and 1-eicosene (C20); and branched α-olefin with a side chain, such as 4-methyl-1-pentene, 9-methyl-1-decene, 11-methyl-1-dodecene, and 12-ethyl-1-tetradecene. Such α-olefin may be used alone or in combinations of two or more. Among them, an α-olefin having 3 to 10 carbon atoms is preferable, and propylene, 1-butene, 1-hexene, and 1-octene are more preferable. Such α-olefin

may be used alone or in combinations of two or more.

Examples of non-conjugated polyenes include: linear non-conjugated dienes, such as 1,4-hexadiene, 1,6-octadiene, 2-methyl-1,5-hexadiene, 6-methyl-1,5-heptadiene, and 7-methyl-1,6-octadiene; cyclic non-conjugated dienes, such as cyclohexadiene, dicyclopentadiene, methyltetrahydroindene, 5-vinyl-2-norbornene, 5-ethylidene-2-norbornene, 5-methylene-2-norbornene, 5-isopropylidene-2-norbornene, and 6-chloromethyl-5-isopropenyl-2-norbornene; and trienes, such as 2,3-diisopropylidene-5-norbornene, 2-ethylidene-3-isopropylidene-5-norbornene, 2-propenyl-2,5-norbomadiene, 1,3,7-octatriene, 1,4,9-decatriene, 4,8-dimethyl-1,4,8-decatriene, and 4-ethylidene-8-methyl-1,7-nonadiene. These non-conjugated polyenes may be used alone or in combinations of two or more. Among them, cyclic non-conjugated dienes, such as 1,4-hexadiene, 5-ethylidene-2-norbornene, 5-vinyl-2-norbornene, 5-ethylidene-2-norbornene, and a 5-vinyl-2-norbornene mixture, are preferable, and 5-ethylidene-2-norbornene and 5-vinyl-2-norbornene are more preferable.

Examples of copolymers (A) include ethylene-1-butene-1,4-hexadiene copolymer, ethylene-1-pentene-1,4-hexadiene copolymer, ethylene-1-hexene-1,4-hexadiene copolymer, ethylene-1-heptene-1,4-hexadiene copolymer, ethylene-1-octene-1,4-hexadiene copolymer, ethylene-1-nonene-1,4-hexadiene copolymer, ethylene-1-decene-1,4-hexadiene copolymer, ethylene-1 -butene-1 -octene-1,4-hexadiene copolymer, ethylene-1-butene-5-ethylidene-2-norbornene copolymer, ethylene-1-pentene-5-ethylidene-2-norbornene copolymer, ethylene-1-hexene-5-ethylidene-2-norbornene copolymer, ethylene-1-heptene-5-ethylidene-2-norbornene copolymer, ethylene-1-octene-5-ethylidene-2-norbornene copolymer, ethylene-1-nonene-5-ethylidene-2-norbornene copolymer, ethylene-1-decene-5-ethylidene-2-norbornene copolymer, ethylene-1-butene-1-octene-5-ethylidene-2-norbornene copolymer, ethylene-1-butene-5-ethylidene-2-norbornene-5-vinyl-2-norbornene copolymer, ethylene-1-pentene-5-ethylidene-2-norbornene-5-vinyl-2-norbornene copolymer, ethylene-1-hexene-5-ethylidene-2-norbornene-5-vinyl-2-norbornene copolymer, ethylene-1-heptene-5-ethylidene-2-norbornene-5-vinyl-2-norbornene copolymer, ethylene-1-octene-5-ethylidene-2-norbornene-5-vinyl-2-norbornene copolymer, ethylene-1-nonene-5-ethylidene-2-norbornene-5-vinyl-2-norbornene copolymer, ethylene-1-decene-5-ethylidene-2-norbornene-5-vinyl-2-norbornene copolymer, and ethylene-1-butene-1-octene-5-ethylidene-2-norbornene-5-vinyl-2-norbornene copolymer.

A copolymer (A) may be used alone or in combinations of two or more.

In the copolymer (A) of ethylene, α-olefin having 3 to 20 carbon atoms, and non-conjugated polyene, the ratio of ethylene to α-olefin; i.e., the molar ratio of a constitutional unit derived from ethylene [A] to a constitutional unit derived from α-olefin [B] ([A]/[B]), is 40/60 to 90/10. The lower limit of the molar ratio [A]/[B] is preferably 45/55, more preferably 50/50, and particularly preferably 55/45. The upper limit of the molar ratio [A]/[B] is preferably 80/20, and more preferably 75/25.

The copolymer (A) has the Mooney viscosity [$ML_{1+4}$ (125°C)] of 50 to 200, preferably 60 to 200, and more preferably 100 to 200, which is measured at 125°C in accordance with JIS K6300 (1994). When the Mooney viscosity is less than 50, mechanical strength and heat resistance are deteriorated. When it exceeds 200, in contrast, moldability of the thermoplastic elastomer is deteriorated.

The copolymer (A) has the iodine value of usually 2 to 50 g/100 g, preferably 5 to 40 g/100 g, and more preferably 7 to 30 g/100 g. When the iodine value is lower than the lower limit, shape restorability is deteriorated at high temperature. When the iodine value is higher than the upper limit, moldability is deteriorated.

In the copolymer (A), the content of a constitutional unit derived from non-conjugated polyene [C] relative to the total amount of the components [A], [B], and [C] (i.e., 100 mol%) is preferably 0.1 to 6.0 mol%, more preferably 0.5 to 4.0 mol%, further preferably 0.5 to 3.5 mol%, and particularly preferably 0.5 to 3.0 mol%. When the content of the constitutional unit derived from non-conjugated polyene [C] is within the range described above, it is likely that an ethylene-based copolymer with sufficient crosslinking properties and flexibility is obtained.

The copolymer can be manufactured by methods as described, for example, in "Porima Seizou Purosesu (Polymer production process) (published by Kogyo Chosakai Publishing Co., Ltd., p.309-330)" or materials relevant to the application of the Applicant such as JP H9-71617 A (1997), JP H9-71618 A (1997), JP H9-208615 A (1997), JP H10-67823 A (1998), JP H10-67824 A (1998), JP H10-110054 A (1998), the pamphlet of International Publication No. WO 2009/081792, and the pamphlet of International Publication No. WO 2009/081794.

Examples of catalysts for olefin polymerization in manufacturing the ethylene-α-olefin-non-conjugated polyene copolymer (A) preferably used in the present invention include: known Ziegler catalysts comprising transition metal compounds such as vanadium (V), zirconium (Zr) or titanium (Ti) and organoaluminum compounds (organoaluminum oxy-compound); known metallocene catalysts comprising transition metal metallocene compounds selected from the fourth group of the periodic table of elements, and organoaluminum oxy-compounds or ionized ionic compounds, for example, a metallocene catalyst described in JP H9-40586 A (1997); known metallocene catalysts comprising specific transition metal compounds and co-catalysts such as boron compounds, for example, a metallocene catalyst described in the pamphlet of International Patent Publication No. WO 2009/072553; transition metal compound catalysts comprising specific transition metal compounds, and organic metal compounds, organoaluminum oxy-compounds, or compounds to react with the transition metal compound to form ion pairs, for example, a transition metal compound catalyst described

in JP 2011-52231 A ; and a catalyst described in JP 2010-241897 A. The copolymer (A) can be also manufactured by use of a catalyst described in the pamphlet of International Patent Publication No. WO 2016/152711. Particularly, use of metallocene catalysts can lead to homogeneous distribution of diene and provide high crosslinking efficiency even in poor incorporation of diene, and can also reduce chlorine content from the catalyst due to high catalytic activity, and therefore is particularly preferable.

<Crystalline propylene-based polymer (B)>

Examples of the crystalline propylene-based polymer (B) used in the present invention include crystalline high-molecular-weight solid products obtained by polymerization of propylene alone or polymerization of propylene with another monoolefin or two or more other monoolefins by a high pressure process or low pressure process. Specific examples of such polymers include an isotactic monoolefin polymer and a syndiotactic monoolefin polymer.

The crystalline propylene-based polymer (B) may be synthesized in accordance with a conventional technique, or a commercially available product may be used.

The crystalline propylene-based polymer (B) may be used alone or in combinations of two or more.

A preferable starting material olefin for the crystalline propylene-based polymer (B) other than propylene is an $\alpha$-olefin having 2 or 4 to 20 carbon atoms. Specific examples thereof include ethylene, 1-butene, 1-pentene, 1-hexene, 1-octene, 1-decene, 2-methyl-1-propene, 3-methyl-1-pentene, 4-methyl-1-pentene, and 5-methyl-1-hexene. Such $\alpha$-olefin having 2 or 4 to 20 carbon atoms may be used alone or in combinations of two or more. The form of polymerization may be random type or block type as long as a resinous product can be obtained. These propylene-based polymers can be used alone or in combinations of two or more.

The crystalline propylene-based polymer (B) used in the present invention is preferably a propylene-based polymer having propylene content of 51 mol% or more relative to the entire constitutional units designated as 100 mol%.

Among these propylene-based polymers, propylene homopolymer, propylene-ethylene block copolymer, propylene-ethylene random copolymer, propylene-ethylene-butene random copolymer etc. are particularly preferable.

The crystalline propylene-based polymer (B) has MFR (ASTM D1238-65T, 230°C, load 2.16 kg) within a range of 0.1 to 4 g/10 min, and preferably 0.5 to 3 g/10 min. When the crystalline propylene-based polymer (B) has MFR of less than 0.1 g/10 min, fluidity of the polymer composition is deteriorated. When MFR exceeds 4 g/10 min, in contrast, mechanical strength of the polymer composition is deteriorated.

The crystalline propylene-based polymer (B) has a melting point (Tm) measured by differential scanning calorimetry (DSC) of 100°C to 200°C, preferably 130°C to 200°C, and further preferably 130°C to 180°C. When the melting point (Tm) is lower than 100°C, oil resistance and heat resistance of the polymer composition are deteriorated. When Tm exceeds 200°C, dispersibility of a component derived from the copolymer (A) in the polymer composition is deteriorated.

The crystalline propylene-based polymer (B) improves mechanical properties of the polymer composition.

The amount of the crystalline propylene-based polymer (B) to be added is 10 to 50 parts by mass, and preferably 15 to 45 parts by mass, relative to 100 parts by mass of the component derived from the copolymer (A), from the viewpoint of rubber elasticity and mechanical strength of the polymer composition. When the amount of the crystalline propylene-based polymer (B) added is less than 10 parts by mass, mechanical strength of the polymer composition is deteriorated. When such amount exceeds 50 parts by mass, rubber elasticity of the polymer composition is deteriorated.

<Crystalline propylene-based polymer (C)>

The crystalline propylene-based polymer (C) used in the present invention comprises a crystalline high-molecular-weight solid product obtained by polymerization of propylene alone or polymerization of propylene with another monoolefin or two or more other monoolefins by a high pressure process or low pressure process. Examples of such polymers include an isotactic monoolefin polymer and a syndiotactic monoolefin polymer.

The crystalline propylene-based polymer (C) may be synthesized in accordance with a conventional technique, or a commercially available product may be used.

The crystalline propylene-based polymer (C) may be used alone or in combinations of two or more.

A preferable starting material olefin for the crystalline propylene-based polymer (C) other than propylene is an $\alpha$-olefin having 2 or 4 to 20 carbon atoms. Specific examples thereof include ethylene, 1-butene, 1-pentene, 1-hexene, 1-octene, 1-decene, 2-methyl-1-propene, 3-methyl-1-pentene, 4-methyl-1-pentene, and 5-methyl-1-hexene. Such $\alpha$-olefin having 2 or 4 to 20 carbon atoms may be used alone or in combinations of two or more. The form of polymerization may be random type or block type as long as a resinous product can be obtained. These propylene-based polymers can be used alone or in combinations of two or more.

The crystalline propylene-based polymer (C) used in the present invention is preferably a propylene-based polymer having propylene content of 51 mol% or more relative to the entire constitutional units designated as 100 mol%.

Among these propylene-based polymers, propylene homopolymer, propylene-ethylene block copolymer, propylene-ethylene random copolymer, propylene-ethylene-butene random copolymer etc. are particularly preferable.

The crystalline propylene-based polymer (C) has MFR (ASTM D1238-65T, 230°C, load 2.16 kg) within a range of 5 to 15 g/10 min, and preferably 7 to 13 g/10 min. When the crystalline propylene-based polymer (C) has MFR of less than 5 g/10 min, molding appearance of the polymer composition is deteriorated. When MFR exceeds 15 g/10 min, in contrast, mechanical strength of the polymer composition is deteriorated.

MFR of the total of the crystalline propylene-based polymer (B) and the crystalline propylene-based polymer (C) can be determined by the following equation:

$$(x/100) \times \log(\text{MFR (B)}) + (y/100) \times \log(\text{MFR (C)}) = (100/100) \times \log\text{MFR}$$

wherein x represents a mass fraction of the crystalline propylene-based polymer (B) relative to the total of the crystalline propylene-based polymer (B) and the crystalline propylene-based polymer (C); y represents a mass fraction of the crystalline propylene-based polymer (C) relative to the total of the crystalline propylene-based polymer (B) and the crystalline propylene-based polymer (C); MFR (B) represents MFR of the crystalline propylene-based polymer (B); MFR (C) represents MFR of the crystalline propylene-based polymer (C); and MFR represents a numerical value determined in accordance with ASTM D1238-65T (230°C, load 2.16 kg). In the present invention, MFR of the total is preferably 1 to 9, and more preferably 1 to 6, from the viewpoint of molding appearance and mechanical properties of the polymer composition.

The crystalline propylene-based polymer (C) has a melting point (Tm) measured by differential scanning calorimetry (DSC) of 100°C to 200°C, preferably 130°C to 200°C, and further preferably 130°C to 180°C. When the melting point (Tm) is lower than 100°C, oil resistance and heat resistance of the polymer composition are deteriorated. When Tm exceeds 200°C, dispersibility of a component derived from the copolymer (A) in the polymer composition is deteriorated.

The crystalline propylene-based polymer (C) improves molding appearance of the polymer composition.

The amount of the crystalline propylene-based polymer (C) to be added is 5 to 30 parts by mass, and preferably 5 to 20 parts by mass, relative to 100 parts by mass of the component derived from the copolymer (A), from the viewpoint of rubber elasticity and molding appearance of the polymer composition. When the amount of the crystalline propylene-based polymer (C) added is less than 5 parts by mass, molding appearance of the polymer composition is deteriorated. When such amount exceeds 30 parts by mass, mechanical properties of the polymer composition is deteriorated.

<Low-molecular-weight polyolefin (D)>

The low-molecular-weight polyolefin (D) used in the present invention is polyolefin having the number average molecular weight (Mn) expressed in terms of polypropylene measured by gel permeation chromatography (GPC), which is 3,000 to 10,000. Preferably, the low-molecular-weight polyolefin (D) does not contain non-conjugated polyene. Preferable examples thereof include polyethylene wax and polypropylene wax, with polypropylene wax being more preferable. In the case of polypropylene wax, in particular, the composition has excellent oil resistance.

Polyethylene wax used in the present invention may be obtained via direct polymerization of ethylene alone or direct polymerization of ethylene and α-olefin. Polyethylene wax may be obtained via thermal decomposition of high-molecular-weight polyethylene. Preferable polyethylene wax is obtained via direct polymerization. Alternatively, polyethylene wax may be obtained by purification by means of, for example, solvent fractionation in which fractionation is performed depending on the solubility in the solvent or via molecular distillation in which fractionation is performed depending on the boiling point. While preferable examples of polyethylene waxes are described in, for example, JP 2009-144146 A, preferable polyethylene waxes are briefly described below.

Examples of polyethylene waxes used in the present invention include ethylene homopolymer and ethylene-α-olefin copolymer. Examples of α-olefin include α-olefin having 3 to 20 carbon atoms, and preferable examples of α-olefin include α-olefin having 3 to 10 carbon atoms. Specific examples of α-olefin include propylene, 1-butene, 1-pentene, 1-hexene, 4-methyl-1-pentene, and 1-octene, with propylene, 1-butene, 1-hexene, and 4-methyl-1-pentene being preferable.

The amount of the constitutional unit derived from ethylene in the entire constitutional units of polyethylene wax is generally 60 to 100 mass%, and preferably 70 to 100 mass %.

The density of the polyethylene wax measured in accordance with the density-gradient column method defined in JIS K7112 (1999) is preferably 890 to 980 kg/$m^3$, and more preferably 900 to 980 kg/$m^3$.

When the polyethylene wax is, for example, an ethylene-α-olefin copolymer, the polyethylene wax density can be regulated by adjusting the proportion of α-olefin to ethylene and selecting a type of α-olefin. For example, the proportion of α-olefin to ethylene is increased, so that the polyethylene wax density can be lowered. Also, the polyethylene wax

density can be regulated by a polymerization temperature in the production process.

The polyethylene wax has the number average molecular weight (Mn) expressed in terms of polyethylene measured by gel permeation chromatography, which is 3,000 to 10,000, preferably 4,000 to 9,000, and more preferably 5,000 to 9,000.

When the number average molecular weight (Mn) of the polyethylene wax is less than 3,000, mechanical properties are deteriorated. When it exceeds 10,000, molding appearance is deteriorated.

The number average molecular weight (Mn) of the polyethylene wax can be regulated by, for example, a polymerization temperature in the production process.

The weight average molecular weight (Mw) of the polyethylene wax expressed in terms of polyethylene measured by gel permeation chromatography is preferably 10,000 to 30,000, and more preferably 15,000 to 30,000.

The melt viscosity of the polyethylene wax at 140°C is preferably 3,000 to 9,000 mPa-s, and more preferably 5,000 to 9,000 mPa-s. The melt viscosity of the polyethylene wax can be measured with the use of, for example, a Brookfield viscometer or a strain-controlled or stress-controlled rheometer.

The melting point (Tm) of the polyethylene wax measured by DSC is preferably 60°C to 150°C, and more preferably 100°C to 180°C, from the viewpoint of heat resistance.

The heat of fusion of the polyethylene wax measured by DSC is preferably 20 J/g or higher, more preferably 40 J/g or higher, further preferably 40 to 150 J/g, and particularly preferably 50 to 120 J/g, from the viewpoint of oil resistance.

The polypropylene wax used in the present invention may be a propylene homopolymer or a copolymer mainly composed of propylene which is obtained by polymerization or copolymerization of propylene, and, according to need, other monomers, in the presence of a stereospecific catalyst, or it may be obtained via thermal decomposition of high-molecular-weight polypropylene. The polypropylene wax may be obtained by purification by means of, for example, solvent fractionation in which fractionation is performed depending on the solubility in the solvent or via molecular distillation in which fractionation is performed depending on the boiling point. Examples of other monomers include ethylene, 1-butene, 1,3-butadiene, 1-hexene, 3-hexene, 1-octene, and 4-octene.

As the polypropylene wax used in the present invention, polypropylene with the propylene content of 90 mass% or more is preferable from the viewpoint of heat resistance.

The density of the polypropylene wax measured in accordance with the density-gradient column method defined in JIS K7112 is preferably 900 to 910 kg/$m^3$.

The polypropylene wax has the number average molecular weight (Mn) expressed in terms of polypropylene measured by gel permeation chromatography, which is 3,000 to 10,000, preferably 4,000 to 9,000, and more preferably 5,000 to 9,000.

When the number average molecular weight (Mn) of the polypropylene wax is less than 3,000, mechanical properties are deteriorated. When it exceeds 10,000, molding appearance is deteriorated.

The number average molecular weight (Mn) of the polypropylene wax can be regulated by, for example, a polymerization temperature in the production process.

The mass average molecular weight (Mw) of the polypropylene wax expressed in terms of polypropylene measured by gel permeation chromatography is preferably 10,000 to 30,000, and more preferably 15,000 to 30,000.

The melt viscosity of the polypropylene wax at 180°C is preferably 300 to 1,500 mPa-s, and more preferably 500 to 1,000 mPa-s. The melt viscosity of the polypropylene wax can be measured with the use of, for example, a Brookfield viscometer or a strain-controlled or stress-controlled rheometer.

The melting point (Tm) of the polypropylene wax measured by DSC is preferably 60°C to 180°C, and more preferably 100°C to 180°C, from the viewpoint of heat resistance.

The heat of fusion of the polypropylene wax measured by DSC is preferably 20 J/g or higher, more preferably 30 to 140 J/g, and further preferably 50 to 120 J/g, from the viewpoint of oil resistance.

In the olefin-based polymer composition according to the present invention, the total amount of the component (B), the component (C), and the low-molecular-weight polyolefin (D) relative to 100 parts by mass of the component derived from the copolymer (A) is preferably 20 to 80 parts by mass, and more preferably 20 to 70 parts by mass, from the viewpoint of molding appearance.

<Phenol resin-based crosslinking agent (E)>

In the present invention, a phenol resin-based crosslinking agent (E) is used as a crosslinking agent.

Examples of the phenol resin-based crosslinking agent (E) (it is also referred to as the crosslinking agent (E)) include resol resins that are manufactured by condensation of an alkyl-substituted phenol or unsubstituted phenol using an aldehyde in an alkali medium, preferably using formaldehyde, or also preferably by condensation of difunctional phenol dialcohols. An alkyl-substituted phenol is preferably an alkyl-substituted phenol having an alkyl substituent containing 1 to 10 carbon atoms. Furthermore, dimethylol phenols or phenol resins substituted at p-position with an alkyl

group containing 1 to 10 carbon atoms are preferred. A phenol resin-based curing resin is typically a thermally crosslinkable resin, and is also referred to as a phenol resin-based crosslinking agent or a phenol resin.

Examples of the phenol resin-based curing resins (phenol resin-based crosslinking agents) can include a compound represented by the following general formula (I).

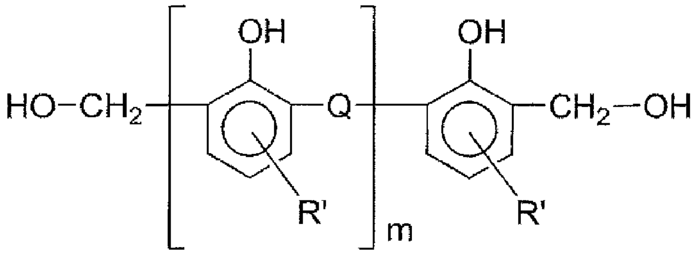

(I)

(wherein Q is a divalent group selected from the group consisting of $-CH_2-$ and $-CH_2-O-CH_2-$, m is 0 or a positive integer of 1 to 20, and R' is an organic group.)

Preferably, Q is a divalent group $-CH_2-O-CH_2-$, m is 0 or a positive integer of 1 to 10, and R' is an organic group having less than 20 carbon atoms. More preferably, m is 0 or a positive integer of 1 to 5, and R' is an organic group having 4 to 12 carbon atoms. Specifically, examples thereof include alkyl phenol formaldehyde resins, methylolated alkyl phenol resins, halogenated alkyl phenol resins, and the like, preferably halogenated alkyl phenol resins, further preferably those with the end hydroxyl group brominated. In the phenol resin-based curing resin, examples of those with the end hydroxyl group brominated include a compound represented by the following general formula (II).

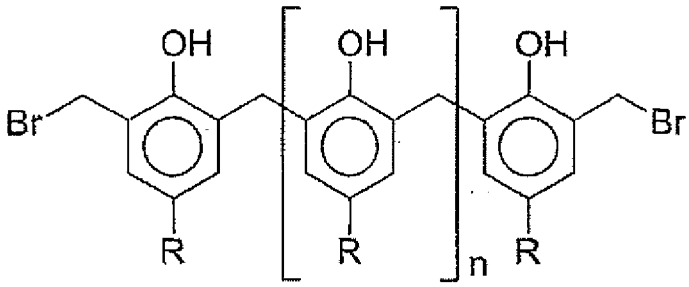

(II)

(wherein n is an integer of 0 to 10, and R is a $C_1$-$C_{15}$ saturated hydrocarbon group).

Examples of products of the phenol resin-based curing resins include TACKIROL™ 201 (alkyl phenol formaldehyde resin, made by Taoka Chemical Co., Ltd.), TACKIROL™ 250-I (brominated alkyl phenol formaldehyde resin that is 4% brominated, made by Taoka Chemical Co., Ltd.), TACKIROL™ 250-III (brominated alkyl phenol formaldehyde resin, made by Taoka Chemical Co., Ltd.), PR-4507 (made by Gunei Chemical Industry Co., Ltd.), Vulkaresat 510E (made by Hoechst), Vulkaresat 532E (made by Hoechst), Vulkaresen E (made by Hoechst), Vulkaresen 105E (made by Hoechst), Vulkaresen 130E (made by Hoechst), Vulkaresol 315E (made by Hoechst), Amberol ST 137X (made by Rohm & Haas), SUMILITERESIN™ PR-22193 (made by Sumitomo Durez Co., Ltd.), Symphorm-C-100 (made by Anchor Chem.), Symphorm-C-1001 (made by Anchor Chem.), TAMANOL™ 531 (made by Arakawa Chemical Industries, Ltd.), Schenectady SP1059 (made by Schenectady Chem.), Schenectady SP1045 (made by Schenectady Chem.), CRR-0803 (made by U.C.C), Schenectady SP1055F (made by Schenectady Chem., brominated alkyl phenol formaldehyde resin), Schenectady SP1056 (made by Schenectady Chem.), CRM-0803 (made by Showa Union Synthesis Co., Ltd.), and Vulkadur A (made by Bayer). Among these, halogenated phenol resin-based crosslinking agents are preferable, and brominated alkyl phenol formaldehyde resins such as TACKIROL™ 250-I, TACKIROL™ 250-III, and Schenectady SP1055F are preferably used.

In addition, specific examples of crosslinking of thermoplastic cross-linked rubber with phenol resins are described in U.S. Pat. No. 4,311,628 A, U.S. Pat. No. 2,972,600 A, and U.S. Pat. No. 3,287,440 A, and these technologies can also be used in the present invention.

U.S. Pat. No. 4,311,628 A discloses a phenol-based crosslinking agent system (phenolic curative system) composed of a phenol-based curing resin (phenolic curing resin), and a crosslinking activator (cure activator). A basic component of the system is a phenol resin-based crosslinking agent produced by condensation of a substituted phenol (for example, halogen substituted phenol or $C_1$-$C_2$ alkyl substituted phenol) or an unsubstituted phenol and an aldehyde, preferably formaldehyde, in an alkali medium, or by condensation of a bifunctional phenol dialcohol (preferably, dimethylol

phenol substituted by a $C_5$-$C_{10}$ alkyl group at the para position). Halogenated alkyl substituted phenol resin-based crosslinking agents produced by halogenating an alkyl substituted phenol resin-based crosslinking agent is particularly suitable. A phenol resin-based crosslinking agent composed of a methylol phenol curing resin, a halogen donor, and a metal compound is particularly recommendable, the details of which are described in U.S. Pat. No. 3,287,440 A and U.S. Pat. No. 3,709,840 A. A non-halogenated phenol resin-based crosslinking agent is used together with a halogen donor, preferably a halogenated hydrogen scavenger. Usually, halogenated phenol resin-based crosslinking agents, preferably brominated phenol resin-based crosslinking agents containing 2 to 10% by mass of bromine, do not need a halogen donor, but are used together with a halogenated hydrogen scavenger such as a metal oxide such as, for example, iron oxide, titanium oxide, magnesium oxide, magnesium silicate, silicon dioxide, and zinc oxide, preferably zinc oxide. Usually 1 to 20 parts by mass of such a halogenated hydrogen scavenger as these including zinc oxide is used relative to 100 parts by mass of phenol resin-based crosslinking agent. The presence of such a scavenger facilitates the crosslinking action of a phenol resin-based crosslinking agent, but, for a rubber which is not easily cross-linked with a phenol resin-based crosslinking agent, a halogen donor and a zinc oxide are desirably used together therewith. A method for producing a halogenated phenol-based curing resin and uses thereof in a crosslinking agent system using zinc oxide are described in U.S. Pat. No. 2,972,600 A and U.S. Pat. No. 3,093,613 A, the disclose of which, together with the disclose of U.S. Pat. No. 3,287,440 A and U.S. Pat. No. 3,709,840 A. Examples of suitable halogen donors include tin chloride, ferric chloride, or halogen-donating polymers such as chlorinated paraffin, chlorinated polyethylene, chlorosulfonated polyethylene, and polychlorobutadiene (neoprene rubber). As used herein, the term "crosslinking activator" refers to any substance that substantially increases the crosslinking efficiency of a phenol resin-based crosslinking agent and encompasses metal oxides and halogen donors, and these are used singly or in combination. For more detail of a phenol-based crosslinking agent system, see "Vulcanization and Vulcanizing Agents" (W. Hoffman, Palmerton Publishing Company). Suitable phenol resin-based crosslinking agents and brominated phenol resin-based crosslinking agents are commercially available and, for example, such crosslinking agents can be purchased from Schenectady Chemicals, Inc. under the trade name of "SP-1045", "CRJ-352", "SP-1055F", and "SP-1056". Similar phenol resin-based crosslinking agents that are equivalent in effect are available from other suppliers.

The crosslinking agent (E) generates a smaller amount of decomposition product and hence is a preferred crosslinking agent in view of prevention of fogging. The crosslinking agent (E) is used in an amount sufficient to achieve the essentially complete crosslinking of rubber.

The crosslinking agent (E) is usually used in an amount of 0.1 to 20 parts by mass, preferably 0.5 to 15 parts by mass relative to 100 parts by mass of the copolymer (A) in view of rubber elasticity of the polymer composition.

In dynamically crosslinking by the crosslinking agent (E) in the present invention, aids can be blended such as sulfur; peroxy crosslinking aids such as p-quinonedioxime, p,p'-dibenzoylquinonedioxime, N-methyl-N,4-dinitrosoaniline, nitrosobenzene, diphenylguanidine, and trimethylolpropane-N,N'-m-phenylenedimaleimide; divinylbenzene, triallyl cyanurate; polyfunctional methacrylate monomers such as ethyleneglycol dimethacrylate, diethyleneglycol dimethacrylate, polyethyleneglycol dimethacrylate, trimethylolpropane trimethacrylate, and allyl methacrylate; polyfunctional vinyl monomers such as vinyl butyrate and vinyl stearate; and the like.

In addition, a decomposition accelerator may be used to accelerate the decomposition of the crosslinking agent (E). Examples of decomposition accelerators include tertiary amines such as triethylamine, tributylamine, and 2,4,6-tri(dimethylamino)phenol; aluminum, cobalt, vanadium, copper, calcium, zirconium, manganese, magnesium, lead, mercury, and the like; naphthenates from naphthenic acid and various metals (for example, Pb, Co, Mn, Ca, Cu, Ni, Fe, Zn, rare earths); and the like.

<Other components>

The composition according to the present invention may be supplemented with additives within a range not adversely affecting the effect of the present invention, in addition to the copolymer (A), the crystalline propylene-based polymer (B), the crystalline propylene-based polymer (C), and the low-molecular-weight polyolefin (D). Additives are not particularly limited, and examples thereof include a softening agent (F) and fillers. Also, known additives used in the polyolefin field can be used. Examples include: rubbers other than the copolymer (A), such as polyisobutylene, butyl rubber, propylene-based elastomers, such as propylene-ethylene copolymer rubber, propylene-butene copolymer rubber, and propylene-butene-ethylene copolymer rubber, ethylene-based elastomers, such as ethylene-propylene copolymer rubber, and styrene-based thermoplastic elastomer; resin other than the crystalline propylene-based polymer (C) and the low-molecular-weight polyolefin (D), such as thermosetting resin, and thermoplastic resin such as polyolefin; acid acceptors; ultraviolet absorbers; antioxidants, heat stabilizers; antiaging agents; light stabilizers; weathering stabilizers; antistatic agents; metal soap; and lubricants, such as waxes other than polyethylene wax and polypropylene wax and aliphatic amide.

Such additives may be used alone or in combinations of two or more.

A softening agent that is generally used for rubber can be used as the softening agent (F). Examples of the

softening agent (F) include: petroleum-based softening agents, such as process oil, lubricating oil, paraffin oil, liquid paraffin, petroleum asphalt, and vaseline; coal tar-based softening agents, such as coal tar and coal tar pitch; fatty oil-based softening agents, such as castor oil, linseed oil, rapeseed oil, soybean oil, and coconut oil; tall oil; sub (factice); waxes, such as beeswax, carnauba wax, and lanolin; fatty acids and fatty acid salts, such as ricinoleic acid, palmitic acid, stearic acid, barium stearate, calcium stearate, and zinc laurate; naphthenic acid; pine oil, rosin or derivatives thereof; synthetic polymer substances, such as terpene resin, petroleum resin, atactic polypropylene, and coumarone-indene resin; ester-based softening agents, such as dioctyl phthalate, dioctyl adipate, and dioctyl sebacate; microcrystalline wax, liquid polybutadiene, modified liquid polybutadiene, liquid thiokol, and hydrocarbon-based synthetic lubricating oil.

The amount of the softening agent (F) to be added is not particularly limited, provided that the effects of the present invention are exerted. Such amount is preferably 90 to 150 parts by mass, and more preferably 100 to 140 parts by mass, relative to 100 parts by mass of the component derived from the copolymer (A). With the use of the softening agent (F) in such amount, the polymer composition can be excellent in fluidity and oil resistance.

Any inorganic fillers or organic fillers can be used, with inorganic fillers being preferable. Examples of inorganic fillers that can be used herein include glass fiber, carbon fiber, silica fiber, asbestos, metal fiber, such as stainless steel, aluminum, titanium, or copper fiber, carbon black, graphite, silica, shirasu balloon, glass bead, silicate, such as calcium silicate, talc, clay, or kaoline, diatomaceous earth, metal oxide, such as iron oxide, titanium oxide, or alumina, metal carbonate, such as calcium carbonate, barium carbonate, or basic magnesium carbonate, metal sulfate, such as barium sulfate, aluminum sulfate, calcium sulfate, or basic magnesium sulfate whisker, metal sulfide, such as molybdenum disulfide, various metal powders, such as magnesium, silicon, aluminum, titanium, or copper powders, mica, mica powder, glass flake, glass sphere, calcium titanate whisker, and aluminum borate whisker. Such fillers may be used alone or in combinations of two or more.

When the content of carbon black is 0.1 to 20 parts by mass, and preferably 1 to 5 parts by mass, relative to 100 parts by mass of the copolymer (A), in particular, the effects of the present invention are remarkable.

As an acid acceptor, a divalent metal oxide or hydroxide, such as ZnO, MgO, CaO, $Mg(OH)_2$, $Ca(OH)_2$, or hydrotalcite $Mg_6Al_2(OH)_{16}CO_3$-$nH_2O$, is used. The amount of such acid acceptor to be used relative to 100 parts by mass of the component derived from the copolymer (A) is generally 20 parts by mass or less, and preferably 0.1 to 10 parts by mass.

Examples of antiaging agents include: aromatic secondary amine-based antiaging agents, such as phenylbutylamine and N,N-di-2-naphthyl-p-phenylenediamine; phenol-based antiaging agents, such as dibutyl hydroxytoluene and tetrakis[methylene(3,5-di-t-butyl-4-hydroxy)hydrocinnamate]methane; thioether-based antiaging agents, such as bis[2-methyl-4-(3-n-alkylthiopropionyloxy)-5-t-butylphenyl]sulfide; dithiocarbamate-based antiaging agents, such as nickel dibutyldithiocarbamate; and sulfur-based antiaging agents, such as 2-mercaptobenzoylimidazole, 2-mercaptobenzimidazole zinc salt, dilauryl thiodipropionate, and distearyl thiodipropionate.

The amount of additives other than the additives, the amount of which to be added is described herein, is not particularly limited, provided that the effects of the present invention are exerted. The amount of such additives is generally 5 parts by mass or less, and preferably 0.01 to 5 parts by mass, and the total amount thereof is generally 10 parts by mass or less, and preferably 0.1 to 5 parts by mass, relative to the total amount (100 parts by mass) of the component derived from the copolymer (A), the crystalline propylene-based polymer (B), and the crystalline propylene-based polymer (C).

[Method for producing the composition]

A method for producing the composition is not particularly limited. For example, an un-crosslinked copolymer (A), the crystalline propylene-based polymer (B), the crystalline propylene-based polymer (C), and the low-molecular-weight polyolefin (D) may be dynamically heat-treated in the presence of the phenol resin-based crosslinking agent (E).

When "dynamically heat-treated" in the present invention, the mixture is kneaded in the molten sate in the presence of the crosslinking agent (E). When "dynamically crosslinked," the mixture is subjected to crosslinking with the application of a shear force thereto.

More specifically, a precursor composition is produced by subjecting the un-crosslinked copolymer (A), at least a part of the crystalline propylene-based polymer (B), at least a part of the crystalline propylene-based polymer (C), at least a part of the low-molecular-weight polyolefin (D), the crosslinking agent (E), and, according to need, the softening agent (F) and a crosslinking aid to dynamic heat treatment. According to need, the remaining crystalline propylene-based polymer (B), the remaining crystalline propylene-based polymer (C), the remaining low-molecular-weight polyolefin (D), and other components are added to the precursor composition. The resulting mixture is then kneaded in the molten state under general conditions, followed by granulation or grinding, to obtain a composition of interest.

Dynamic heat treatment in the present invention is preferably conducted in a non-open type apparatus, and preferably conducted under an inert gas atmosphere such as nitrogen and carbon dioxide gas. The temperature of heat

treatment is within the range between the melting points of the crystalline propylene-based polymer (B) and the crystalline propylene-based polymer (C), and 300°C, usually 150 to 270°C, preferably 170 to 250°C. Kneading time is usually 1 to 20 minutes, preferably 1 to 10 minutes. The shear force to be applied is within a range of 10 to 50,000 $sec^{-1}$, preferably 100 to 10,000 $sec^{-1}$ expressed as shear rate.

As a kneading apparatus, a mixing roll, intensive mixer (for example Banbury mixer, kneader), single-screw or twin-screw extruder etc. can be used, however, a non-open type apparatus is preferable.

A thermoplastic elastomer in which at least a part of the copolymer (A) is cross-linked can be obtained by the above-mentioned dynamic heat treatment. Polymers cross-linked in the obtained thermoplastic elastomer are mainly the copolymer (A).

[Physical properties of the composition]

In the olefin-based polymer composition according to the present invention, at least a part of the component derived from the copolymer (A) is crosslinked by the phenol resin-based crosslinking agent (E).

The olefin-based polymer composition according to the present invention has MFR (230°C, load 10 kg) of preferably 5 to 150 g/10 min, more preferably 5 to 140 g/10 min, and further preferably 5 to 100 g/10 min, from the viewpoint of moldability.

From the viewpoint of rubber elasticity, the olefin-based polymer composition according to the present invention has the Shore A hardness (i.e., the instantaneous value) of preferably 50 to 80, and more preferably 50 to 70, which is measured in accordance with JIS K6253.

The compression set of the olefin-based polymer composition according to the present invention measured by the method described in the examples below (CS, measured under 25% compression at 70°C for 22 hours) is not particularly limited, and it is preferably 10% to 40%.

[Formed product]

The formed product according to the present invention is obtained by subjecting the polymer composition to a known molding technique, such as injection molding, extrusion molding, solution casting, inflation molding, compression molding, transfer molding, or casting molding.

Examples of the formed products according to the present invention include air cleaner seals, air intake hoses, cable connectors, and cushion rubber.

The present specification encompasses the content described in the specification of JP 2019-030631 which is the basis of priority of the present application.

Examples

Hereafter, the present invention is described in greater detail with reference to the examples, although the present invention is not limited to these examples.

[Method of measurement and method of evaluation]

[Molar amounts and masses of constitutional units of ethylene-α-olefin-non-conjugated polyene copolymer]

The molar amounts and masses of the constitutional unit derived from ethylene, the constitutional unit derived from α-olefin, and the constitutional unit derived from non-conjugated polyene were determined by intensity measurement by $^1$H-NMR spectroscopy.

[Mooney viscosity]

The Mooney viscosity [$ML_{1+4}$ (125°C)] of the ethylene-α-olefin-non-conjugated polyene copolymer was determined using the Mooney viscometer (model: SMV202, Shimadzu Corporation) in accordance with JIS K6300 (1994).

[Melting point (Tm) of components (B), (C) and (D)]

The Melting point was measured by the following method in accordance with JIS K7121 using a differential scanning calorimetry (DSC).

About 5 mg of a polymer was put in an aluminum pan for measurement in a differential scanning calorimetry (DSC220C) manufactured by Seiko Instruments Inc., and the aluminum pan was sealed, then the polymer was heated from room temperature to 200°C at 10°C/min. The polymer was maintained at 200°C for 5 minutes to be completely

melted, then cooled to -50°C at 10°C/min. After maintaining the polymer at -50°C for 5 minutes, second heating was conducted to 200°C at 10°C/min, and the peak temperature (°C) during the second heating was determined as the melting point (Tm) of the polymer. When a plurality of peaks were detected, the peak detected at highest temperature was adopted.

[Mn of Component (D) expressed in terms of polypropylene]

The number average molecular weight (Mn) was measured by GPC under the following conditions. The number average molecular weight (Mn) and the weight average molecular weight (Mw) were determined by preparing a calibration curve using commercially available standard monodisperse polystyrene and transforming the resultant into the polypropylene calibration curve (a universal calibration method).

Apparatus: Gel permeation chromatograph HLC-8321/HT, Tosoh Corporation
Solvent: o-dichlorobenzene
Columns: TSKgel GMH6-HT × 2, TSKgel GMH6-HTL columns × 2 (Tosoh Corporation)
Flow rate: 1.0 ml/min
Sample: 0.15 mg/ml o-dichlorobenzene solution
Temperature: 140°C

[Mn of Component (D) expressed in terms of polyethylene]

The number average molecular weight (Mn) was measured by GPC under the following conditions. The number average molecular weight (Mn) and the weight average molecular weight (Mw) were determined by preparing a calibration curve using commercially available standard monodisperse polystyrene and transforming the resultant into the polyethylene calibration curve (a universal calibration method).

Apparatus: Gel permeation chromatograph HLC-8321/HT, Tosoh Corporation
Solvent: o-dichlorobenzene
Columns: TSKgel GMH6-HT × 2, TSKgel GMH6-HTL columns × 2 (Tosoh Corporation)
Flow rate: 1.0 ml/min
Sample: 0.15 mg/ml o-dichlorobenzene solution
Temperature: 140°C

[Physical properties of thermoplastic elastomer composition (olefin-based polymer composition) and formed product]

The methods for evaluation of physical properties of thermoplastic elastomer compositions in the examples and comparative examples are as described below.

[Shore A hardness]

Pellets of the obtained thermoplastic elastomer composition were press-molded at 230°C for 6 minutes using a 100-ton electrothermal automatic press (Shoji Co.) and then cool-pressed at room temperature for 5 minutes to prepare press sheets each having a thickness of 2 mm. With the use of the sheet, the scale was read immediately after contact with the pushing needle using an A type measuring instrument in accordance with JIS K 6253.

[Tensile properties]

The tensile properties were measured in accordance with JIS K6301.

Test strips made by stamping out dumbbell No.3 strips from press sheets having a thickness of 2 mm were used.

Measurement temperature: 23°C
$M_{100}$: Stress at 100% elongation (MPa)
$T_B$: Tensile strength (MPa)
$E_B$: Elongation at break (%)

[Compression set (CS)]

Pellets of the obtained thermoplastic elastomer composition were press-molded at 230°C for 6 minutes using a 100-ton electrothermal automatic press (Shoji Co., Ltd.) and then cool-pressed at room temperature for 5 minutes to prepare press sheets each having a thickness of 2 mm.
In accordance with JIS K6250, the press sheets each having a thickness of 2 mm prepared above were laminated and subjected to a compression set test in accordance with JIS K6262.
The laminate of sheets having a thickness of 12 mm (a laminate of four 3-mm-thick sheets) was subjected to the compression set test under 25% compression at 70°C for 22 hours, and measurement was carried out 30 minutes after the removal of a strain (compression).

[Oil resistance test: weight change rate]

A liquid paraffin (soft) (code No.: 26132-35, NAKALAI TESQUE, INC.) was used as test oil, and a press sheet having a thickness of 2 mm was immersed in the oil at 80°C for 24 hours. Thereafter, the sample surface was wiped and weight change rates were measured (n = 2).

[Molding appearance]

Molding was carried out using a vertical injection molding machine SV-50 (Sumitomo Heavy Industries, Ltd.) and a cylindrical mold (pin gate diameter: 1 mm; inner diameter: 16 mm; outer diameter: 22 mm; width: 100 mm) at a molding temperature of 220°C and an injection speed of 70 mm/s.
Evaluation criteria:

Good: A white mark is visually observed on the surface of the formed product.
Poor: A white mark is not visually observed on the surface of the formed product.

[Used materials]

(1) Copolymer (A)

As the copolymer (A), a commercially available ethylene-propylene-5-ethylidene-2-norbornene copolymer rubber (EPDM) (the ethylene/propylene ratio: 73/27 mol%; the iodine value 13; the Mooney viscosity [$ML_{1+4}$ (125°C)]: 116) was used.

(2) Crystalline propylene-based polymers

The crystalline propylene-based polymers described below were used.

(B-1) Commercially available propylene homopolymer (MFR (230°C, load 2.16 kgf): 0.5 g/10 min; Tm measured by DSC: 165°C)
(B-2) Commercially available propylene homopolymer (MFR (230°C, load 2.16 kgf): 2 g/10 min; Tm measured by DSC: 170°C)
(B-3) Commercially available propylene block polymer (ethylene content: 7 mass%; MFR (230°C, 2.16 kgf): 3 g/10 min; Tm measured by DSC: 160°C)
(C-1) Commercially available propylene homopolymer (MFR (230°C, load 2.16 kgf): 9 g/10 min; Tm measured by DSC: 165°C)
(X-1) Commercially available propylene block polymer (ethylene content: 4 mass%; MFR (230°C, 2.16 kgf): 50 g/10 min; Tm measured by DSC: 160°C)

(3) Low-molecular-weight polyolefin (D)

As the low-molecular-weight polyolefin (D), the polypropylene waxes or polyethylene waxes described below were used.

(D-1) Commercially available polypropylene wax (propylene content: 100 mass%; Mn: 5,000; Mw: 20,000: Tm measured by DSC: 160°C; heat of fusion measured by DSC: 102 J/g)
(D-2) Commercially available polypropylene wax (propylene content: 95 mass%; Mn: 6,000; Mw: 20,000: Tm measured by DSC: 130°C; heat of fusion measured by DSC: 53 J/g)
(D-3) Commercially available polyethylene wax (ethylene content: 100 mass%; Mn: 5,000; Mw: 20,000: Tm measured by DSC: 130°C; heat of fusion measured by DSC: 110 J/g; density: 920 kg/$m^3$)

(4) Lubricant

As the lubricant, erucic acid amide (ALFLOW P-10, NOF CORPORATION) was used.

(5) Softening agent

As the softening agent, paraffin-based process oil (Diana Process Oil™ PW-100, Idemitsu Kosan Co., Ltd.) was used.

(6) Phenol resin-based crosslinking agent (E)

As the phenol resin-based crosslinking agent, brominated alkyl phenol formaldehyde resin (product name: SP-1055F, Schenectady) was used.

(7) Acid acceptor

As the acid acceptor, zinc oxide (Type II zinc oxide, HAKUSUI TECH CO., LTD.) was used.

(8) Filler

As the filler, carbon black masterbatch (product name: PEONY BLACK F32387MM, DIC) was used.

[Example 1]

The ethylene-α-olefin-non-conjugated polyene copolymer (A) (100 parts by mass), 27 parts by mass of the crystalline propylene-based polymer (B) (i.e., a crystalline propylene-based polymer (B-1)), 8 parts by mass of the crystalline propylene-based polymer (C) (i.e., a propylene homopolymer (C-1)), 8 parts by mass of the low-molecular-weight polyolefin (D) (i.e., polypropylene wax (D-1)), 8 parts by mass of the phenol resin-based crosslinking agent (E) (i.e., brominated alkyl phenol formaldehyde resin (product name: SP-1055F, Schenectady)), 0.5 parts by mass of the acid acceptor (i.e., zinc oxide (Type II zinc oxide, HAKUSUI TECH CO., LTD.), 3 parts by mass of the filler (i.e., carbon black masterbatch (product name: PEONY BLACK F32387MM, DIC)), and 120 parts by mass of the softening agent (Diana Process Oil™ PW-100, paraffin oil) were mixed, and the mixture was kneaded and dynamically cross-linked using an extruder (product number: KTX-30, Kobe Steel, Ltd., cylinder temperature: C1: 50°C, C2: 90°C, C3: 100°C, C4: 120°C, C5: 180°C, C6: 200°C, C7-C14: 200°C, die temperature: 200°C, screw revolution: 500 rpm, extrusion rate: 40 kg/h) to obtain the pellets of the thermoplastic elastomer composition.

Pellets of the obtained thermoplastic elastomer composition were press-molded at 230°C for 6 minutes using a 100-ton electrothermal automatic press (Shoji Co.) and then cool-pressed at room temperature for 5 minutes to prepare test pieces each having a thickness of 2 mm.

Physical properties were evaluated using the test pieces. The results are shown in Table 1.

[Examples 2 to 9 and Comparative Examples 1 to 8]

The pellets and test pieces were obtained in the same manner as in Example 1, except that the compositions were changed as shown in Table 1 or 2. The results are shown in Table 1 or 2.

[Table 1]

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Components | | | | | | | | | | |
| Copolymer (A) | EPDM | 100 | 100 | 100 | 100 | 100 | 100 | 100 | 100 | 100 |

(continued)

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Components | | | | | | | | | | |
| Crystalline propylene-based polymer (B) | B-1 (MFR=0.5) | 27 | 22 | 22 | 14 | 3 | 6 | 6 | 22 | 6 |
| Crystalline propylene-based polymer (B) | B-2 (MFR=2) | | | | | | | | | |
| Crystalline propylene-based polymer (B) | B-3 (MFR=3) | | | | | 14 | 11 | 20 | | 11 |
| Crystalline propylene-based polymer (C) | C-1 (MFR=9) | 8 | 8 | 8 | 16 | 13 | 12 | 8 | 8 | 12 |
| Crystalline propylene-based polymer | X-1 (MFR=50) | | | | | | | | | |
| Polypropylene wax | D-1 (Mn=5000) | 5 | 10 | | 10 | 7 | 7 | 7 | | 12 |
| Polypropylene wax | D-2 (Mn=6000) | | | 10 | | | | | | |
| Polyethylene wax | D-3 (Mn=5000) | | | | | | | | 10 | |
| Lubricant | Erucic acid amide | | | | | | | | | |
| Softening agent (F) | Diana Process Oil PW-100 | 120 | 120 | 120 | 120 | 130 | 130 | 130 | 120 | 140 |
| Crosslinking agent (E) | SP-1055F | 8 | 8 | 8 | 8 | 8 | 8 | 8 | 8 | 8 |
| Acid acceptor | Type II zinc oxide | 0.5 | 0.5 | 0.5 | 0.5 | 0.5 | 0.5 | 0.5 | 0.5 | 0.5 |
| Carbon black | PEONY BLACK F32387MM | 3 | 3 | 3 | 3 | 3 | 3 | 3 | 3 | 3 |
| A hardness | | 67 | 69 | 70 | 69 | 58 | 59 | 58 | 70 | 61 |
| MFR | | 16 | 60 | 45 | 75 | 20 | 25 | 15 | 50 | 130 |
| M100 | | 2.4 | 2.5 | 2.5 | 2.3 | 1.7 | 1.8 | 1.8 | 2.6 | 2 |
| TB | | 5.3 | 5.7 | 5.6 | 5.3 | 3.8 | 3.9 | 4 | 5.3 | 4.4 |
| EB | | 300 | 320 | 350 | 300 | 260 | 270 | 280 | 280 | 280 |
| CS(70°C×22h) | | 22 | 23 | 25 | 23 | 18 | 18 | 18 | 25 | 20 |

(continued)

| | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Components | | | | | | | | | |
| Oil resistance test: weight change rate (80°C×24h) | 58 | 52 | 58 | 55 | 64 | 64 | 64 | 60 | 60 |
| Molding appearance | Good | Good | Good | Good | Good | Good | Good | Good | Good |

[Table 2]

| Components | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Copolymer (A) | EPDM | 100 | 100 | 100 | 100 | 100 | 100 | 100 | 100 |
| Crystalline propylene-based polymer (B) | B-1(MFR=0.5) | 32 | | | 30 | 35 | 30 | 27.5 | 22 |
| Crystalline propylene-based polymer (B) | B-2(MFR=2) | | 40 | | | | | | |
| Crystalline propylene-based polymer (B) | B-3(MFR=3) | | | | | | | | |
| Crystalline propylene-based polymer (C) | C-1(MFR=9) | 8 | | 40 | | | | 8 | 8 |
| Crystalline propylene-based polymer | X-1(MFR=50) | | | | 10 | | | | |
| Polypropylene wax | D-1(Mn=5000) | | | | | 5 | 10 | 2.5 | |
| Polypropylene wax | D-2(Mn=6000) | | | | | | | | |
| Polyethylene wax | D-3(Mn=5000) | | | | | | | | |
| Lubricant | Erucic acid amide | | | | | | | | 10 |
| Softening agent (F) | Diana Process Oil PW -100 | 120 | 120 | 120 | 120 | 120 | 120 | 120 | 120 |
| Crosslinking agent (E) | SP-1055F | 8 | 8 | 8 | 8 | 8 | 8 | 8 | 8 |
| Acid acceptor | Type II zinc oxide | 0.5 | 0.5 | 0.5 | 0.5 | 0.5 | 0.5 | 0.5 | 0.5 |
| Carbon black | PEONYBLACK F32387MM | 3 | 3 | 3 | 3 | 3 | 3 | 3 | 3 |
| A hardness | | 68 | 68 | 69 | 69 | 68 | 69 | 69 | 67 |
| MFR | | 10 | 9 | 40 | 18 | 10 | 30 | 23 | 30 |
| M100 | | 2.6 | 2.5 | 2.5 | 2.4 | 2.5 | 2.4 | 2.5 | 2.1 |
| TB | | 6 | 5.9 | 4.7 | 6 | 6.1 | 6 | 6.2 | 5.8 |

(continued)

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|
| Components | | | | | | | | |
| EB | 300 | 310 | 250 | 330 | 350 | 300 | 310 | 280 |
| CS(70°C×22h) | 21 | 21 | 21 | 21 | 22 | 22 | 22 | 25 |
| Oil resistance test: weight change rate (80°C×24h) | 55 | 55 | 55 | 56 | 55 | 58 | 55 | 60 |
| Molding appearance | Poor | Poor | Poor | Poor | Poor | Poor | Poor | Poor |

As shown in Tables 1 and 2, when the polymer composition satisfies the requirements of the present invention, mechanical properties, molding appearance, and oil resistance are well-balanced.

## Claims

1. An olefin-based polymer composition comprising:

   a component derived from a copolymer (A) (100 parts by mass) comprising a constitutional unit derived from ethylene, a constitutional unit derived from an $\alpha$-olefin having 3 to 20 carbon atoms, and a constitutional unit derived from non-conjugated polyene and having (a-1) the Mooney viscosity [$ML_{1+4}$ (125°C)] of 50 to 200;
   one or more types of crystalline propylene-based polymers (B) (10 to 50 parts by mass in total) that satisfy the requirements (b-1) and (b-2):

      (b-1) MFR (230°C, load 2.16 kg) of 0.1 to 4 g/10 min; and
      (b-2) a melting point (Tm) measured by DSC of 100°C to 200°C;

   one or more types of crystalline propylene-based polymers (C) (5 to 30 parts by mass in total) that satisfy the requirements (c-1) and (c-2):

      (c-1) MFR (230°C, load 2.16 kg) of 5 to 15 g/10 min; and
      (c-2) a melting point (Tm) measured by DSC of 100°C to 200°C; and

   low-molecular-weight polyolefin (D) (4 to 18 parts by mass) that satisfies the requirement (d-1):
   (d-1) the number average molecular weight measured by gel permeation chromatography of 3,000 to 10,000, wherein the amounts of (B), (C), and (D) are each relative to 100 parts by mass of (A) and at least a part of the component derived from the copolymer (A) is crosslinked by a phenol resin-based crosslinking agent (E).

2. The olefin-based polymer composition according to Claim 1, wherein the low-molecular-weight polyolefin (D) further satisfies the requirement (d-2):
   (d-2) the heat of fusion measured by DSC of 20 J/g or more.

3. The olefin-based polymer composition according to Claim 1 or 2, which further comprises 90 to 150 parts by mass of a component derived from a softening agent (F).

4. The olefin-based polymer composition according to any one of Claims 1 to 3, which has MFR (230°C, load 10 kg) of 5 to 150 g/10 min.

5. The olefin-based polymer composition according to any one of Claims 1 to 4, wherein the total amount of the component (B), the component (C), and the low-molecular-weight polyolefin (D) relative to 100 parts by mass of the component derived from the copolymer (A) is 20 to 80 parts by mass.

6. The olefin-based polymer composition according to any one of Claims 1 to 5, which has the Shore A hardness (i.e., the instantaneous value) measured in accordance with JIS K6253 of 50 to 80.

7. A formed product, which is obtained from the olefin-based polymer composition according to any one of Claims 1 to 6.

8. The formed product according to Claim 7, which is an injection molding product.

## Patentansprüche

1. Polymerzusammensetzung auf Olefinbasis, umfassend eine Komponente,

   die von einem Copolymer (A) (100 Massenteile) abgeleitet ist, das eine Grundeinheit, die von Ethylen abgeleitet ist, eine Grundeinheit, die von einem $\alpha$-Olefin mit 3 bis 20 Kohlenstoffatomen abgeleitetist und eine Grundeinheit, die von nichtkonjugiertem Polyen abgeleitet ist, umfasst, und
   (a-1) eine Mooney-Viskosität [$ML_{1+4}$ (125°C)] von 50 bis 200 aufweist;

eine oder mehrere Arten von kristallinen Polymeren auf Propylenbasis (B) (10 bis 50 Massenteile insgesamt), die die Anforderungen (b-1) und (b-2) erfüllen:

(b-1) der MFR (230°C, Last 2,16 kg) beträgt 0,1 bis 4 g/10 min; und
(b-2) der Schmelzpunkt (Tm), gemessen mittels DSC, beträgt 100°C bis 200°C;

eine oder mehrere Arten von kristallinen Polymeren auf Propylenbasis (C) (5 bis 30 Massenteile insgesamt), die die Anforderungen (c-1) und (c-2) erfüllen:

(c-1) der MFR (230°C, Last 2,16 kg) beträgt 5 bis 15 g/10 min; und
(c-2) der Schmelzpunkt (Tm), gemessen mittels DSC, beträgt 100°C bis 200°C; und

niedermolekulares Polyolefin (D) (4 bis 18 Massenteile), das die Anforderung (d-1) erfüllt:
(d-1) das Zahlenmittel des Molekulargewichts, gemessen durch Gelpermeationschromatographie, beträgt 3.000 bis 10.000,
wobei die Mengen von (B), (C) und (D) jeweils auf 100 Massenteile von (A) bezogen sind und mindestens ein Teil der von dem Copolymer (A) abgeleiteten Komponente durch ein Vernetzungsmittel (E) auf Phenolharzbasis vernetzt ist.

**2.** Polymerzusammensetzung auf Olefinbasis gemäß Anspruch 1, wobei das niedermolekulare Polyolefin (D) ferner die Anforderung (d-2) erfüllt:
(d-2) die Schmelzwärme, gemessen mittels DSC, beträgt 20 J/g oder mehr.

**3.** Polymerzusammensetzung auf Olefinbasis gemäß Anspruch 1 oder 2, die ferner 90 bis 150 Massenteile einer von einem Weichmacher (F) abgeleiteten Komponente enthält.

**4.** Polymerzusammensetzung auf Olefinbasis gemäß mindestens einem der Ansprüche 1 bis 3, die einen MFR (230°C, Last 10 kg) von 5 bis 150 g/10 min aufweist.

**5.** Polymerzusammensetzung auf Olefinbasis gemäß mindestens einem der Ansprüche 1 bis 4, wobei die Gesamtmenge der Komponente (B), der Komponente (C) und des niedermolekularen Polyolefins (D), bezogen auf 100 Massenteile der von dem Copolymer (A) abgeleiteten Komponente, 20 bis 80 Massenteile beträgt.

**6.** Polymerzusammensetzung auf Olefinbasis gemäß mindestens einem der Ansprüche 1 bis 5, die eine Shore-A-Härte (d.h. einen Momentanwert), gemessen nach JIS K6253, von 50 bis 80 aufweist.

**7.** Formprodukt, das aus der Polymerzusammensetzung auf Olefinbasis gemäß mindestens einem der Ansprüche 1 bis 6 erhalten wird.

**8.** Formprodukt gemäß Anspruch 7, das ein Spritzgießprodukt ist.

## Revendications

**1.** Composition polymère à base d’oléfine comprenant :

un composant dérivé d’un copolymère (A) (100 parties en masse) comprenant une unité constitutionnelle dérivée de l’éthylène, une unité constitutionnelle dérivée d’une $\alpha$-oléfine présentant 3 à 20 atomes de carbone, et une unité constitutionnelle dérivée d’un polyène non conjugué et présentant (a-1) la viscosité Mooney [$ML_{1+4}$ (125 °C)] de 50 à 200;
un ou plusieurs types de polymères cristallins à base de propylène (B) (10 à 50 parties en masse au total) qui satisfont aux exigences (b-1) et (b-2) :

(b-1) MFR (230 °C, charge 2,16 kg) de 0,1 à 4 g/10 min ; et
(b-2) un point de fusion (Tm) mesuré par DSC de 100 °C à 200 °C ;

un ou plusieurs types de polymères cristallins à base de propylène (C) (5 à 30 parties en masse au total) qui satisfont aux exigences (c-1) et (c-2) :

(c-1) MFR (230 °C, charge 2,16 kg) de 5 à 15 g/10 min ; et
(c-2) un point de fusion (Tm) mesuré par DSC de 100 °C à 200 °C ; et

une polyoléfine à faible poids moléculaire (D) (4 à 18 parties en masse) qui satisfait à l'exigence (d-1) :
(d-1) le poids moléculaire moyen en nombre mesuré par chromatographie par perméation de gel de 3 000 à 10 000,
dans laquelle les quantités de (B), (C) et (D) sont chacune relatives à 100 parties en masse de (A) et au moins une partie du composant dérivé du copolymère (A) est réticulée par un agent de réticulation à base de résine phénolique (E).

2. Composition polymère à base d'oléfine selon la revendication 1, dans laquelle la polyoléfine à faible poids moléculaire (D) satisfait en outre à l'exigence (d-2) :
(d-2) la chaleur de fusion mesurée par DSC de 20 J/g ou plus.

3. Composition polymère à base d'oléfine selon la revendication 1 ou 2, qui comprend en outre de 90 à 150 parties en masse d'un composant dérivé d'un agent adoucissant (F).

4. Composition polymère à base d'oléfine selon l'une quelconque des revendications 1 à 3, qui présente une MFR (230 °C, charge 10 kg) de 5 à 150 g/10 min.

5. Composition polymère à base d'oléfine selon l'une quelconque des revendications 1 à 4, dans laquelle la quantité totale du composant (B), du composant (C) et de la polyoléfine à faible poids moléculaire (D) par rapport à 100 parties en masse du composant dérivé du copolymère (A) est de 20 à 80 parties en masse.

6. Composition polymère à base d'oléfine selon l'une quelconque des revendications 1 à 5, qui présente la dureté Shore A (c'est-à-dire la valeur instantanée) mesurée selon la norme JIS K6253 de 50 à 80.

7. Produit formé, qui est obtenu à partir de la composition polymère à base d'oléfine selon l'une quelconque des revendications 1 à 6.

8. Produit formé selon la revendication 7, qui est un produit de moulage par injection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5499156 A
- JP H971617 A
- JP H971618 A
- JP H9208615 A
- JP H1067823 A
- JP H1067824 A
- JP H10110054 A
- WO 2009081792 A
- WO 2009081794 A
- JP H940586 A
- WO 2009072553 A
- JP 2011052231 A
- JP 2010241897 A
- WO 2016152711 A
- JP 2009144146 A
- US 4311628 A
- US 2972600 A
- US 3287440 A
- US 3709840 A
- US 3093613 A
- JP 2019030631 A